# EUROPÄISCHE PATENTANMELDUNG

(11) **EP 4 653 509 A1**
(43) Veröffentlichungstag der Anmeldung: **26.11.2025**
(21) Anmeldenummer: 25178110.0
(22) Anmeldetag: 22.05.2025
(51) Int. Cl.: C09K 3/10, C09D 175/04, C08K 3/04

(54) **REAKTIVE FLÜSSIGKUNSTSTOFFE ENTHALTEND BLÄHGRAPHIT**

(30) Priorität: 23.05.2024 DE 102024114438
(71) Anmelder: FRANKEN SYSTEMS GmbH, 97258 Gollhofen (DE)
(72) Erfinder: Luckert, Sven, 97320 Sulzfeld (DE); Schobben, Christian, 48268 Greven (DE); Schäfer, Julian, 97204 Höchberg (DE); Budesheim, Gohar, 97318 Kitzingen (DE)
(74) Vertreter: Gleim Petri Patent- und Rechtsanwaltspartnerschaft mbB

(57) **Zusammenfassung**

Reaktiver Flüssigkunststoff zur Dachabdichtung umfassend Blähgraphit in einer Menge von 2 Gew% bis 15 Gew%.

## Beschreibung

Gegenstand der Erfindung sind reaktive Flüssigkunststoffe, die Blähgraphit enthalten sowie deren Verwendung zur Herstellung intumeszierender Dachabdichtungen.

Der zukünftige Bedarf für Photovoltaik-Anlagen auf Flachdächern zeichnet sich als eine dringende Notwendigkeit ab, die maßgeblich durch den Klimawandel, steigende Energiepreise und verschärfte gesetzliche Auflagen beeinflusst wird. Dieser Bedarf erstreckt sich sowohl auf bereits bestehende Gebäude als auch auf neu zu errichtende Strukturen. Insbesondere die Installation von Photovoltaik-Anlagen auf Flachdächern wird in Anbetracht dieser Entwicklungen zu einer unverzichtbaren Maßnahme, um den stetig steigenden Energiebedarf zu decken und gleichzeitig den ökologischen Fußabdruck zu verringern.

Bei Neubauten bietet sich die Möglichkeit, Photovoltaik-Anlagen unter besonderer Berücksichtigung des vorbeugenden Brandschutzes zu integrieren, was einen langfristigen und sicheren Betrieb gewährleistet. Jedoch stellt sich bei Sanierungen eine herausfordernde Situation dar: die geltenden Brandschutzregelungen zum Zeitpunkt der Erstellung werden zwar während der Sanierung eingehalten, jedoch erfolgt dies gänzlich ohne Berücksichtigung der zusätzlichen Risiken im Zusammenhang mit dem Betrieb von nachträglich installierten Photovoltaik-Anlagen. Diese Risiken sind beträchtlich, da es im Falle eines Kurzschlusses zu langandauernden Lichtbogenentladungen kommt, die brandursächlich sind. Im Hinblick auf eine Brandausbreitung sind diesbezüglich Flachdächer mit Dachabdichtungen auf Basis von bituminösen Dachbahnen besonders kritisch zu bewerten, insbesondere wenn zusätzlich brennbare Dämmstoffe vorhanden sind.

Für bestehende Flachdächer, bei denen aus Gründen der Statik keine Kiesaufschüttung aufgebracht werden kann, gibt es aktuell keinerlei Möglichkeiten zur Nachrüstung mit Photovoltaik-Elementen unter Einhaltung der aktuellen Brandschutzrichtlinien.

Aufgabe der vorliegenden Erfindung war daher die Bereitstellung verbesserter Dachabdichtungsmaterialien zur Optimierung des Brandschutzes zwecks nachträglicher Installation von Photovoltaik-Elementen. Diese Aufgabe konnte mit der Bereitstellung der nachstehend näher beschriebenen Flüssigkunststoffe gelöst werden.

Gegenstand der vorliegenden Erfindung sind reaktive Flüssigkunststoffe zur Dachabdichtung gemäß EOTA Leitlinie ETAG 005, dadurch gekennzeichnet, dass sie 2 bis 10 Gew% an Blähgraphit enthalten. Gegenstand der vorliegenden Erfindung ist auch ein Verfahren zur Herstellung intumeszierender Dachabdichtungen.

Im Rahmen der vorliegenden Erfindung wurde die überraschende Beobachtung gemacht, dass mit Hilfe der nachstehend näher beschriebenen Flüssigkunststoffe Dachabdichtungen mit intumeszierenden Eigenschaften hergestellt werden können, die den darunterliegenden Dachaufbau höchst effizient vor einem Brand schützen können und eine Brandausbreitung zuverlässig verhindern. Im Rahmen entsprechender Brandversuche konnte gezeigt werden, dass die Schutzwirkung der intumeszierenden Dachabdichtungen ausreicht, um auch brandtechnisch kritische Aufbauten zuverlässig vor einer Brandausbreitung zu schützen. Damit wird es möglich, beliebige ältere Dachaufbauten brandschutztechnisch dahingehend zu optimieren, dass ein gefahrloser Betrieb von Photovoltaik-Anlagen auf diesen Dachaufbauten möglich wird.

In den Flüssigkunststoffen des Standes der Technik werden bisher ganz überwiegend Aluminiumhydroxid und Magnesiumhydroxid als feste Flammschutzmittel verwendet. Die mögliche Verwendung von Blähgraphit in reaktiven Flüssigkunststoffen - bevorzugt in Kombination mit Aluminiumhydroxid und Magnesiumhydroxid - zur Herstellung von intumeszierenden, flüssig aufzubringenden Dachabdichtungen ist bisher nicht bekannt.

In der neueren WO 2022 247993 A1 werden 2-komponentige Abdichtungsmaterialien beschrieben, bestehend aus einer wässrigen Polymerdispersion und einem mineralischen Bindemittelsystem. Im Rahmen der zur Formulierung einzusetzenden Brandverzögerer werden Blähgraphite und Aluminiumhydroxid pauschal genannt, jedoch handelt es sich bei den Bindemitteln dieser Veröffentlichung um wässrige Beschichtungsprodukte, die frostempfindlich und problematisch in der dickschichtigen Anwendung sind, da sie einen erheblichen Schrumpf durch Verdunsten des Wassers aufweisen. Hinweise auf die erfindungsgemäße Kombination von reaktiven Flüssigkunststoffen mit ausgewählten Blähgraphiten finden sich in dieser Veröffentlichung nicht.

Bei den erfindungsgemäß einsetzbaren Flüssigkunststoffen, die während der Formulierung oder nachträglich mit Blähgraphit additiviert werden können, handelt es sich um an sich bekannte, weitestgehend lösemittelfreie, reaktive Dachabdichtungsmaterialien des Standes der Technik, die der EOTA Leitlinie ETAG 005 (Leitlinie für die europäische Technische Zulassung für flüssig aufzubringende Dachabdichtungen) entsprechen. Erfindungsgemäß geeigneten Materialien werden flüssig auf das Dach aufgebracht und härten durch radikalische Polymerisation, Polyaddition oder Silan-Polykondensation unter Umgebungsbedingungen.

Grundsätzlich legt die EOTA-Leitlinie ETAG 005 auch die Mindestanforderungen an den Brandschutz mit Bezugnahme auf die EN 13501-1 fest. Im Rahmen der vorliegenden Erfindung hat sich gezeigt, dass die mit Hilfe der erfindungsgemäßen Flüssigkunststoffe herstellbaren intumeszierenden Dachabdichtungen diese Mindestanforderungen erheblich übertreffen.

Erfindungsgemäß einsetzbar sind beispielsweise Flüssigkunststoffe auf Basis von ungesättigten Acrylatcopolymeren. Derartige Flüssigkunststoffe enthalten typischerweise größere Mengen an Methylmethacrylat, ungesättigte Acrylat- und/oder Methacrylatcopolymere und ggf. weitere Ester der Acrylsäure und/oder Methacrylsäure. Die Aushärtung erfolgt mittels radikalischer Polymerisation, die durch Zugabe von organischen Peroxiden insbesondere Dibenzoylperoxid initiiert wird. Flüssigkunststoffe auf Basis von ungesättigten Acrylatcopolymeren werden beispielhaft beschrieben in der koreanischen Patentschrift KR101192384 B1 oder der WO2021181117A1.

Geeignete Flüssigkunststoffe auf Basis von Polyurethanen sind bevorzugt einsetzbar. Dies sind die an sich bekannten ein- und zweikomponentigen Beschichtungsmassen auf Basis von aromatischen und/oder aliphatischen Polyisocyanaten mit Polyolen und/oder Polyaminen. Geeignet sind beispielsweise einkomponentige Polyurethan-Flüssigkunststoffe auf Basis von Isocyanatprepolymeren, die durch Einwirkung von Luftfeuchtigkeit unter Harnstoffbildung aushärten. Weiterhin geeignet sind einkomponentige Polyurethanflüssigkunststoffe, die neben Polyisocyanaten und Polyisocyanatprepolymeren Polyoxazolidine, Polyaldimine und/oder Polyketimine enthalten. Derartige einkomponentige Polyurethansysteme sind beschrieben in der WO2016005457A1, der WO2014114640A1, der WO2014114642A1, der WO2014114643A1, der WO2014114641A1.

Besonders bevorzugt geeignete einkomponentige Polyurethan-Flüssigkunststoffe basieren auf Alkoxysilan-funktionalisierten Polyurethanen und härten durch Silanpolykondensation aus. Derartige Alkoxysilan-funktionalisierte Polyurethane werden beispielhaft beschrieben in der EP-A 1 987 108, EP-A 2 352 776 und EP-A 2 561 024 sowie der WO 2019 114990 A1 und können gegebenenfalls auch zweikomponentig formuliert werden, so wie dies beispielhaft in der EP4063421A1 beschrieben ist.

Bevorzugt einsetzbare zweikomponentige Flüssigkunststoffe auf Basis von Polyurethanen bestehen aus einer Polyisocyanatkomponente und einer Polyolkomponente und/oder einer Polyaminkomponente. Geeignet sind beispielsweise zweikomponentige Flüssigkunststoffe auf Basis von Diphenylmethandiisocyanat und ggf. modifiziertem Ricinusöl sowie Flüssigkunststoffe auf Basis von aromatischen und/oder aliphatischen Polyisocyanatprepolymeren mit aromatischen Aminen wie Diethyltoluendiamin oder Dimethylthiotoluendiamin. Besonders bevorzugt geeignet sind zweikomponentige Polyurethan-Flüssigkunststoffe auf Basis von aliphatischen Polyisocyanaten und Polyasparaginsäureestern wie sie beispielhaft in der EP3115388B1 oder der WO2022253635A1 beschrieben sind.

Zur Herstellung erfindungsgemäßen Flüssigkunststoffe werden die vorstehend beschriebenen Flüssigkunststoffe während der Formulierung oder auch nachträglich additiviert mit expandierbaren Graphit-Intercalationsverbindungen, die als Blähgraphit bekannt sind und im Handel erhältlich sind. Es handelt sich dabei um Verbindungen, die zwischen den Gitterschichten des Graphits eingelagerte Fremdbestandteile - Intercalate - enthalten. Solche expandierbaren Graphit-Intercalations-Verbindungen werden üblicherweise dadurch hergestellt, dass man Graphitteilchen in einer Lösung dispergiert, die ein Oxidationsmittel und die einzulagernde Gastverbindung enthält.

Üblicherweise angewandte Oxidationsmittel sind Salpetersäure, Kaliumchlorat, Chromsäure, Kaliumpermanganat, Wasserstoffperoxid und dergleichen. Als einzulagernde Verbindung wird vielfach konzentrierte Schwefelsäure verwendet, wie dies beispielsweise in der EP0085121A1 beschrieben wird. Blähgraphit ist ein allgemein bekanntes Flammschutzadditiv, welches in Beschichtungsmitteln und Dichtstoffen für Brandschutzabdichtungen vielfach eingesetzt wird. Beispielhaft für Anwendungen als expandierender Dichtstoff sei hier die EP3004197A1 genannt.

Erfindungsgemäß als Blähgraphite einsetzbar sind bekannte Einlagerungsverbindungen von SOₓ, NOₓ, Halogen und/oder Säuren in Graphit. Bevorzugt sind Blähgraphite, die bei einer Starttemperatur von 150 bis 300°C, vorzugsweise 180 bis 230°C unter Aufblähen SO₂, SO₃, NO und/oder NO₂ abgeben. Bevorzugt einsetzbare Blähgraphite weisen eine mittelgroße Kornverteilung auf, wobei 80% der Körner eine Korngröße >100 µm, bevorzugt >150 µm aufweisen. Besonders bevorzugt einsetzbare Blähgraphit-Typen enthalten kein Treibmittel und weisen ein Ausdehnungsvolumen von mehr als 100 cm³/g (1000°C) auf, bevorzugt mehr als 200cm³/g (1000°C).

Erfindungsgemäß werden die vorstehend charakterisierten Blähgraphite in Mengen von 2 bis 15 Gew%, vorzugsweise 3 bis 9 Gew%, besonders bevorzugt 4 bis 8 Gew% bezogen auf das Gesamtgewicht des Flüssigkunststoffs eingesetzt.

Die Einarbeitung des Blähgraphits in die erfindungsgemäß einsetzbaren Flüssigkunststoffe erfolgt typischerweise durch Dispergieren mittels Kreisdissolver. Hierbei wird Blähgraphit bevorzugt gegen Ende des Dispergierprozesses, also nach Zugabe aller anderen Füllstoffe und Pigmente bei niedriger Drehzahl eingearbeitet.

Die so erhaltenen erfindungsgemäßen Flüssigkunststoffe weisen nur ein geringfügig verändertes rheologisches Verhalten auf, insbesondere nur eine wenig erhöhte Viskosität. Somit ist es möglich, erfindungsgemäß geeignete Flüssigkunststoffe auch nachträglich mit Blähgraphit auszurüsten.

Gegenstand der vorliegenden Erfindung ist auch ein Verfahren zur Herstellung intumeszierender Dachabdichtungen durch Aufbringen reaktiver Flüssigkunststoffe in Kombination mit einem textilen Flächengewebe.

Die Applikation der erfindungsgemäßen Flüssigkunststoffe erfolgt im erfindungsgemäßen Verfahren grundsätzlich so, dass die Bedingungen der EOTA-Leitline ETAG 005 eingehalten werden. Hierzu werden die erfindungsgemäßen Flüssigkunststoffe gemäß Verarbeitungsvorschrift als einkomponentiges oder zweikomponentiges Material auf eine gereinigte und gegebenenfalls durch Schleifen oder Grundieren vorbehandelte Dachfläche aufgebracht. In einer ersten Lage werden typischerweise 1,3 kg/m² bis 2 kg/m² Flüssigkunststoff durch Streichen, Rollen oder Rakeln appliziert. In den reagierenden Flüssigkunststoff wird anschließend ein textiles Flächengewebe (Vliesarmierung) eingelegt. Als textile Flächengewebe sind alle gewirkten, gestrickten, gewebten, geflochtenen, gehäkelten oder auf sonstige Art aus Garnen oder Fasern hergestellten Flächengebilde gemeint. Geeignete textile Flächengewebe basieren auf organischen oder anorganische Fasern, wie beispielsweise Glasfasern, Kohlefasern oder Kunststofffasern, wie beispielsweise Polyester-, Polyamid-, Aramid- oder Polyacrylatfasern, Metallfasern oder Fasern mit metallischen Bestandteilen o. dgl.. Vorzugsweise werden Vliesmaterialien eingesetzt wie Glasfaservliese oder Polyestervliese, besonders bevorzugt Glasfaservliese. Auf das textile Flächengewebe wird eine zweite Lage des erfindungsgemäßen Flüssigkunststoffs aufgebracht, typischerweise wiederum in einer Menge von 1,3 kg/m² bis 2 kg/m².

Im Rahmen der vorliegenden Erfindung hat es sich als vorteilhaft erwiesen, wenn die erste Lage Flüssigkunststoff weniger Blähgraphit enthält als die zweite Schicht. Im Rahmen entsprechender Brandversuche hat sich gezeigt, dass in diesen Fällen die Beschichtung weniger stark aufplatzt und somit weniger Sauerstoff an darunterliegende brandgefährdete Schichten gelangt. In einer besonderen Ausführungsform der vorliegenden Erfindung enthält die erste Lage Flüssigkunststoff kein Blähgraphit (d.h. nicht erfindungsgemäßen unmodifizierten Flüssigkunststoff), nur die zweite Schicht enthält den erfindungsgemäßen Flüssigkunststoff, enthaltend Blähgraphit im Sinne der vorstehend gemachten Angaben. Hierbei unterscheiden sich die Flüssigkunststoffe der ersten und der zweiten Schicht lediglich hinsichtlich des Gehaltes an Blähgraphit. Die Dachabdichtung wird dabei grundsätzlich so aufgebracht, dass eine Mindestschichtdicke der ausgehärteten Beschichtung von 2 mm erreicht wird.

Gegenstand der vorliegenden Erfindung ist auch die Verwendung der erfindungsgemäßen Flüssigkunststoffe zur Herstellung intumeszierender Dachabdichtungen entsprechend der EOTA-Leitlinie ETAG 005.

Die Zusammensetzung der erfindungsgemäßen Flüssigkunststoffe und deren Verarbeitung sind grundsätzlich so ausgestaltet, dass die Anforderungen der EOTA-Leitlinie ETAG 005 vollumfänglich erfüllt werden, so dass die brandschutztechnisch optimierten Dachkonstruktionen eine voraussichtliche Lebensdauer von 25 Jahren haben. Im Übrigen entsprechen die brandschutztechnisch optimierten Dachkonstruktionen den aktuellen Anforderungen an den Brandschutz und sind somit ideal geeignet zur nachträglichen Installation von Photovoltaik-Anlagen.

### Beispiele

### Beispiel 1 (nicht erfindungsgemäß)

Handelsüblicher einkomponentiger Flüssigkunststoff auf Basis eines silanterminierten Polyurethans enthaltend 19 Gew% Aluminiumtrihydroxyd, (Frankosil^{®}1K PLUS der Fa. Franken Systems GmbH, Gollhofen).

### Beispiel 2 (nicht erfindungsgemäß)

Handelsüblicher zweikomponentigerFlüssigkunststoff auf Basis von aliphatischen Polyisocyanaten und Poyasparaginsäureestern (Revopur WP200 der Fa. Franken Systems GmbH, Gollhofen). Die Polyasparaginsäureester-Komponente des Polyurethan-Flüssigkunststoffs enthält 15 Gew% Aluminiumtrihydroxyd.

### Beispiel 3 (nicht erfindungsgemäß)

Ein einkomponentiger Polyurethanflüssigkunststoff hergestellt gemäß Beispiel 1, WO 2014114642 A1.

### Beispiel 4 (nicht erfindungsgemäß)

Ein mittels Peroxid härtbarer handelsüblicher Flüssigkunststoff auf Basis Polymethylmethacrylat (Triflex ProDetail^{®} der Fa. Triflex GmbH & CoKG, Minden).

### Beispiel 5 (erfindungsgemäß)

In einen handelsüblicher einkomponentigen Flüssigkunststoff auf Basis eines silanterminierten Polyurethans enthaltend 19 Gew% Aluminiumtrihydroxyd, (Frankosil^{®}1K PLUS der Fa. Franken Systems GmbH, Gollhofen) werden 5 Gew% Blähgraphit (BLG 250T der Fa. RMC Remacon GmbH, Säckingen, Starttemperatur 200°C, Expansionsrate>200cm³/g (1000°C), Kornverteilung 80% >250µm) mittels Kreisdissolver bei niedriger Drehzahl eingearbeitet.

### Beispiel 6 (erfindungsgemäß)

In die Polyasparaginsäureester-Komponente eines handelsüblichen Polyurethan-Flüssigkunststoffs auf Basis aliphatischer Polyisocyanate und Polyasparaginsäureestern enthaltend 15 Gew% Aluminiumtrihydroxyd, (Revopur WP200 der Fa. Franken Systems GmbH, Gollhofen) werden 5 Gew% Blähgraphit (BLG 250T der Fa. RMC Remacon GmbH) mittels Kreisdissolver bei niedriger Drehzahl eingearbeitet.

### Beispiel 7 (erfindungsgemäß)

In einen einkomponentigen Polyurethanflüssigkunststoff hergestellt gemäß Beispiel 1, WO 2014114642 A1, werden 6 Gew% Blähgraphit (BLG 300TS der Fa. RMC Remacon GmbH, Säckingen, Starttemperatur 180°C, Expansionsrate>400cm³/g (1000°C), Kornverteilung 80% >300µm) mittels Kreisdissolver bei niedriger Drehzahl eingearbeitet.

### Beispiel 8 (erfindungsgemäß)

In einen mittels Peroxid härtbaren handelsüblichen Flüssigkunststoff auf Basis Polymethylmethacrylat (Triflex ProDetail^{®} der Fa. Triflex GmbH & CoKG, Minden) werden 6 Gew% Blähgraphit Typ Ex 180 der Fa. NGS Trading & Consulting GmbH, Leinburg, Starttemperatur 185°C, Expansionsrate ca. 320 cm³/g (1000°C), Kornverteilung 90% >180µm) mittels Kreisdissolver in die Harzkomponente bei niedriger Drehzahl eingearbeitet.

### Beispiel 9 (erfindungsgemäß)

In einen einkomponentigen Flüssigkunststoff auf Basis eines silanterminierten Polyurethans, hergestellt gemäß WO2011131506A1 Beispiel 1, mit der Änderung, dass die Menge an Aluminiumtrihydrat auf 5 Gew% gesenkt wurde, werden 9 Gew% Blähgraphit (BLG 250T der Fa. RMC Remacon GmbH, Säckingen, Starttemperatur 200°C, Expansionsrate>200cm³/g (1000°C), Kornverteilung 80% >250µm) mittels Kreisdissolver bei niedriger Drehzahl eingearbeitet.

### Beispiel 10 (erfindungsgemäß)

In einen einkomponentigen Flüssigkunststoff auf Basis eines silanterminierten Polyurethans, hergestellt gemäß WO2011131506A1 Beispiel 1, mit der Änderung, dass die Menge an Aluminiumtrihydrat auf 1 Gew% gesenkt wurde, werden 12 Gew% Blähgraphit (BLG 250T der Fa. RMC Remacon GmbH, Säckingen, Starttemperatur 200°C, Expansionsrate>200cm³/g (1000°C), Kornverteilung 80% >250µm) mittels Kreisdissolver bei niedriger Drehzahl eingearbeitet.

### Beispiel 11 (nicht erfindungsgemäß)

Ein Polyurethan-Flüssigkunststoff auf Basis aliphatischer Polyisocyanate und Polyasparaginsäureestern enthaltend 41 Gew% Aluminiumtrihydroxyd, hergestellt nach EP3115388B1 Beispiel 8.

### Beispiel 12 (erfindungsgemäß)

Ein Polyurethan-Flüssigkunststoff auf Basis aliphatischer Polyisocyanate und Polyasparaginsäureestern enthaltend, hergestellt nach EP3115388B1 Beispiel 8, bei dem die Menge an Aluminiumtrihydroxyd in der Polyasparaginsäureester-Komponente auf 30 Gew% gesenkt wurde, werden 3 Gew% Blähgraphit (BLG 250T der Fa. RMC Remacon GmbH) mittels Kreisdissolver bei niedriger Drehzahl eingearbeitet.

### Beispiel 13 Durchführungen Brandversuche (nicht erfindungsgemäß)

An einer Haltevorrichtung frei-hängend werden die zu prüfende Musterflächen mit einer Größe von 20 x 30 cm, mit einem handelsüblichen Handbrenner (Butangasbrenner der Fa. Tom), mit einem Abstand von 5 cm und einer Flammentemperatur von ca. 1300°C über einen Zeitraum von 10 Minuten beflammt. Bei einem Brandtest unterworfen. Der Brandtests werden vorzeitig abgebrochen, sobald die Bitumenbahn beginnt zu brennen.

Es erfolgte eine Bewertung der entsprechenden Brandtests entsprechend folgenden Merkmalen.

| Bewertung | Bedeutung |
|---|---|
| - | Nach sehr kurzer Zeit nicht mehr intakt, brennt ggf. eigenständig weiter |
| 0 | Kurzzeitiger Widerstand bei Beflammung, geringe brandhemmende Wirkung |
| + | Guter Widerstand gegen Beflammung, gute brandhemmende Wirkung |
| ++ | Sehr hoher Widerstand gegen Beflammung, ausgeprägte brandhemmende Wirkung, Abdichtung nach Testende intakt |

### Brandversuche Beispielserie 1 (nicht erfindungsgemäß)

Entsprechend Beispiel 13 wurden folgende handelsübliche Dachbahnen einem Brandversuch unterzogen.

| **Beispiel Serie 1** | **Abdichtungsbahn** | **Bewertung** |
|---|---|---|
| Bsp. 14 | PVC (Bauder Thermofol U) | - |
| Bsp. 15 | FPO (Bauder Thermoplan T) | - |
| Bsp. 16 | Bitumen (BauderKARAT) | - |

### Brandversuche Beispielserien 2 bis 4 (erfindungsgemäß)

Auf verschiedenen Untergründen mit einer Größe von ca. 20 x 30 cm werden ca. 170 g eines Flüssigkunststoff durch Verteilen mit einer Rakel gleichmäßig eingebracht. Die durchschnittliche Schichtstärke der so hergestellten Beschichtung beträgt 2,3 +/- 0,3 mm. Die so erhaltenen Musteraufbauten werden über 28 Tage bei einer Umgebungstemperatur von 20°C gelagert und dann einem Brandtest, entsprechend Beispiel 13, unterworfen.

| **Beispielserie 2 (PVC-Bahn)** | | **Beispielserie 3 (FPO-Bahn)** | | **Beispielserie 4 (BitumenBahn)** | |
|---|---|---|---|---|---|
| **Kombination aus Bsp. 14 und** | **Bewertung** | **Kombination aus Bsp. 15 und** | **Bewertung** | **Kombination aus Bsp. 16 und** | **Bewertung** |
| Bsp. 1 | - | Bsp. 1 | - | Bsp. 1 | - |
| Bsp. 2 | - | Bsp. 2 | - | Bsp. 2 | - |
| Bsp. 3 | - | Bsp. 3 | - | Bsp. 3 | - |
| Bsp. 4 | - | Bsp. 4 | - | Bsp. 4 | - |
| Bsp. 5 | ++ | Bsp. 5 | ++ | Bsp. 5 | ++ |
| Bsp. 6 | ++ | Bsp. 6 | ++ | Bsp. 6 | ++ |
| Bsp. 7 | ++ | Bsp. 7 | ++ | Bsp. 7 | ++ |
| Bsp. 8 | ++ | Bsp. 8 | ++ | Bsp. 8 | ++ |
| Bsp. 9 | 0 | Bsp. 9 | 0 | Bsp. 9 | 0 |
| Bsp. 10 | + | Bsp. 10 | + | Bsp. 10 | + |
| Bsp. 11 | 0 | Bsp. 11 | 0 | Bsp. 11 | 0 |
| Bsp. 12 | + | Bsp. 12 | + | Bsp. 12 | + |

### Brandversuche Beispielserien 5 bis 8 (erfindungsgemäß)

Auf einer Kunststoffbahn aus Bsp. 15, mit einer Größe von ca. 20 x 30 cm, werden ca. 85 g eines Flüssigkunststoff durch Verteilen mit einer Rakel gleichmäßig eingebracht. In die reagierende Masse wird ein Vlies eingelegt und vorsichtig angedrückt, so dass die Unterseite gleichmäßig von der reagierenden Masse benetzt ist. Danach werden weitere 85 g der reagierenden Masse auf der Oberseite des Vlieses ausgebracht und mit einer Rakel gleichmäßig verteilt. Die durchschnittliche Schichtstärke der so hergestellten vliesarmierten Abdichtung beträgt 2,3 +/- 0,3 mm.

### Beispiele Vlies (nicht erfindungsgemäß)

| | **Beschreibung Vlies** |
|---|---|
| Bsp. 17 | Polyestervlies mit einem Flächengewicht von 110g/m² (Frankolon Vlies, der Firma Franken Systems Gollhofen) |
| Bsp. 18 | Polyestervlies mit einem Flächengewicht von 165g/m² (Frankolon Vlies, der Firma Franken Systems Gollhofen) |
| Bsp. 19 | Glasvlies mit einem Flächengewicht von 225g/m² (QUALITY GFM225MMT, der Firma Hagulan, Fulda) |
| Bsp. 20 | Aramidvlies mit einem Flächengewicht von 50 - 100g/m² (Spunlace, der Fa. Norafin, Mildenau) |

Die so erhaltenen Musteraufbauten werden über 28 Tage bei einer Umgebungstemperatur von 20°C gelagert und dann einem Brandtest, entsprechend Beispiel 13, unterworfen.

| **Beispielserie 5** | | **Beispielserie 6** | | **Beispielserie 7** | | **Beispielserie 8** | |
|---|---|---|---|---|---|---|---|
| **Kombinat ion aus Bsp. 17 und** | **Bewert ung** | **Kombina tion aus Bsp. 18 und** | **Bewert ung** | **Kombinati on aus Bsp. 19 und** | **Bewert ung** | **Kombina tion aus Bsp. 19 und** | **Bewert ung** |
| Bsp. 1 | - | Bsp. 1 | - | Bsp. 1 | 0 | Bsp. 1 | 0 |
| Bsp. 2 | - | Bsp. 2 | - | Bsp. 2 | 0 | Bsp. 2 | 0 |
| Bsp. 5 | ++ | Bsp. 5 | ++ | Bsp. 5 | + | Bsp. 5 | + |
| Bsp. 6 | ++ | Bsp. 6 | ++ | Bsp. 6 | + | Bsp. 6 | + |
| Bsp. 11 | 0 | Bsp. 11 | 0 | Bsp. 11 | 0 | Bsp. 11 | 0 |

### Brandversuche Beispielserie 9 und 10 (erfindungsgemäß)

Auf einer Kunststoffbahn aus Bsp. 15, mit einer Größe von ca. 20 x 30 cm werden ca. 85 g eines Flüssigkunststoff mit geringem Anteil, oder ohne Blähgraphit, durch Verteilen mit einer Rakel gleichmäßig eingebracht. In die reagierende Masse wird ein Vlies eingelegt und vorsichtig angedrückt, so dass die Unterseite gleichmäßig von der reagierenden Masse benetzt ist. Danach werden weitere 85 g eines Blähgraphithaltigen Flüssigkunststoff auf der Oberseite des Vlieses ausgebracht und mit einer Rakel gleichmäßig verteilt. Die durchschnittliche Schichtstärke der so hergestellten vliesarmierten Abdichtung beträgt 2,3 +/- 0,3 mm. Die so erhaltenen Musteraufbauten werden über 28 Tage bei einer Umgebungstemperatur von 20°C gelagert und dann einem Brandtest, entsprechend Beispiel 13, unterworfen.

| **Beispielserie 10** | | **Beispielserie 11** | |
|---|---|---|---|
| **Kombination aus Bsp. 17 und** | **Bewert ung** | **Kombination aus Bsp. 19 und** | **Bewertung** |
| Erste Lage Flüssigkunststoff: Bsp. 1 | ++ | Erste Lage Flüssigkunststoff: Bsp. 1 | ++ |
| Zweite Lage Flüssigkunststoff: Bsp. 5 | | Zweite Lage Flüssigkunststoff: Bsp. 5 | |
| Erste Lage Flüssigkunststoff: Bsp. 2 | ++ | Erste Lage Flüssigkunststoff: Bsp. 2 | ++ |
| Zweite Lage Flüssigkunststoff: Bsp. 6 | | Zweite Lage Flüssigkunststoff: Bsp. 6 | |

## Patentansprüche

1. Reaktiver Flüssigkunststoff zur Dachabdichtung umfassend Blähgraphit in einer Menge von 2 Gew% bis 15 Gew%.

2. Reaktiver Flüssigkunststoff gemäß Anspruch 1, umfassend eine Menge von 3 Gew% bis 9 Gew% an Blähgraphit.

3. Reaktiver Flüssigkunststoff gemäß Anspruch 1, umfassend eine Menge von 4 Gew% bis 8 Gew% an Blähgraphit.

4. Reaktiver Flüssigkunststoff gemäß einem der Ansprüche 1 bis 3, **dadurch gekennzeichnet, dass** das Blähgraphit eine Korngröße im Bereich von 50 µm bis 600 µm hat.

5. Reaktiver Flüssigkunststoff gemäß einem der Ansprüche 1 bis 4, **dadurch gekennzeichnet, dass** das Blähgraphit einen Anteil von 80% bis 90% der Korngröße im Bereich von 50 µm bis 600 µm hat.

6. Reaktiver Flüssigkunststoff gemäß einem der Ansprüche 1 bis 4, **dadurch gekennzeichnet, dass** das Blähgraphit einen Anteil der Korngröße im Bereich von 80 % < 75 µm bis 80 % > 500 µm hat.

7. Reaktiver Flüssigkunststoff gemäß Anspruch 4, **dadurch gekennzeichnet, dass** das Blähgraphit kein Treibmittel enthält.

8. Reaktive Flüssigkunststoffe gemäß einem oder mehreren der Ansprüche 1 bis 7, **dadurch gekennzeichnet**, ferner umfassend Aluminiumtrihydroxid.

9. Reaktive Flüssigkunststoffe gemäß Anspruch 8, **dadurch gekennzeichnet**, ferner umfassend Aluminiumtrihydroxid in einer Menge von 5 Gew% bis 50 Gew%.

10. Reaktive Flüssigkunststoffe gemäß einem oder mehreren der Ansprüche 1 bis 9, **dadurch gekennzeichnet, dass** der reaktive Flüssigkunststoff Ein- oder Zweikomponenten- Polyurethane umfasst.

11. Reaktive Flüssigkunststoffe gemäß Anspruch 10, **dadurch gekennzeichnet, dass** der Flüssigkunststoff ein Zweikomponenten-Polyurethan auf Basis aliphatischer Polyisocyanate und Polyasparaginsäureestern umfasst.

12. Reaktive Flüssigkunststoffe gemäß einem oder mehreren der Ansprüche 1 bis 11, **dadurch gekennzeichnet, dass** der reaktive Flüssigkunststoff ein silyliertes Polyurethan umfasst.

13. Verfahren zur Herstellung einer intumeszierenden Dachabdichtung umfassend die Schritte Aufbringen eines reaktiven Flüssigkunststoffs gemäß einem oder mehreren der Ansprüche 1 bis 12 und Aufbringen eines textilen Flächengewebes.

14. Verfahren gemäß Anspruch 13, wobei das textile Flächengewebe ein Glasvlies ist.

15. Verfahren gemäß Anspruch 13 oder 14, **dadurch gekennzeichnet, dass** der Flüssigkunststoff in einer ersten Lage und in einer zeiten Lage, wobei die erste Lage weniger Blähgraphit enthält als die zweite Lage.

16. Verfahren zur Herstellung intumeszierender Dachabdichtungen gemäß Anspruch 12, **dadurch gekennzeichnet, dass** der Flüssigkunststoff in der erste Lage kein Blähgraphit umfasst.

17. Verwendung reaktiver Flüssigkunststoffe gemäß einem oder mehreren der Ansprüche 1 bis 12 zur Herstellung intumeszierender Dachabdichtungen gemäß EOTA-Leitlinie ETAG 005.

18. Verwendung reaktiver Flüssigkunststoffe gemäß Anspruch 17 in Kombination mit einem textilen Flächengewebe.

19. Verwendung reaktiver Flüssigkunststoffe gemäß Anspruch 17 in Kombination mit einem Glasvlies.
